# EUROPEAN PATENT APPLICATION

(11) **EP 1 332 705 A1**
(43) Date of publication of application: **06.08.2003**
(21) Application number: 03250258.5
(22) Date of filing: 15.01.2003
(51) Int. Cl.: A47J 43/27, B67C 11/00

(54) **Devices for preparing beverages, particularly café au lait**

(30) Priority: 16.01.2002 US 46188
(71) Applicant: Kibbutz Ramat Rachel, 90900 Doar Na Mate Yehuda (IL)
(72) Inventor: Lichi, Yuval, Rama Rachel (IL)
(74) Representative: Ablewhite, Alan James

(57) **Abstract**

The invention provides a device for preparing a beverage in a drinking vessel (2) having an open top, said beverage including a first liquid (5) and a second liquid (8) of lower density than said first liquid, said device comprising a flow restrictor member (40) through which said second liquid (8) is transferred into said drinking vessel (2) after said first liquid has been introduced therein, said flow restrictor member (40) being formed with a plurality of holes (48a,48b,48c) therein of such size, number and distribution to permit said second liquid (8) to flow therethrough at a rate such that said second liquid forms a distinct layer over said first liquid (5) with a minimum of turbulence and mixing with respect to said first liquid, wherein said flow restrictor member (40) includes a peripheral wall (44), a bottom wall (46) formed with said plurality of holes (48a,48b,48c) and a hollow tube (42) fixed centrally to said bottom wall (46) to define, within said hollow tube (42), an inner well (41) of relatively small volume and, between said hollow tube (42) and said peripheral wall (44), an outer well (43) of greater volume, said bottom wall (46) being formed with at least one further hole (47) communicating with said inner well (41) of larger diameter than each of said plurality of holes (48a,48b,48c), such that said second liquid within said inner well (41) flows out from said at least one further hole (47) into said drinking vessel (2) at a higher flow rate than that of said second liquid from said outer well (43) through each of said plurality of holes (48a,48b,48c) in said bottom wall (46).

## Description

### FIELD AND BACKGROUND OF THE INVENTION

The present invention relates to devices for preparing beverages of the type that includes multiple liquids. The invention is particularly useful for preparing cafe au lait, and is therefore described below with respect to this application.

Ambiance is an essential element of the food and beverage service industry. An establishment's success or failure often depends upon the mood created therein. The efficiency of the service and the appearance of the food and beverages served are critical elements that influence the popularity of restaurants. Accordingly, food service establishments strive to offer a menu of popular dishes presented in an attractive and efficient manner.

A very popular beverage, particularly in coffee shops, is café au lait, served in a layered fashion within the drinking vessel. This beverage consists of a layer of hot coffee above a layer of steamed milk presented to the diner unmixed in a vessel made of transparent material such as clear glass. After admiring the seeming impossibility of the spectacle, the diner then has the option of sipping from the top layer or mixing both layers together. Indeed, with the advent of the rising popularity of coffee, café au lait, particularly in such an elegant layered presentation, is a very popular drink for home consumption.

This beverage is typically prepared in a time-consuming two-step process. First the milk is placed into the drinking vessel. Thereafter the coffee is very slowly introduced into the vessel in such a way that it does not mix with the milk, but remains "floating" above it. This is done by slowly dripping the hot coffee over an object such as a spoon held above the layer of milk or by tilting the vessel and slowly allowing the coffee to flow down the wall of the vessel and onto the layer of milk. Such a layer separation is physically possible because of the higher temperature and lower density of the hot coffee as well as the surface tension existing above the layer of milk. These conditions may be overcome by mechanically mixing the two fluids, as by stirring, shaking, or introducing the coffee in a vigorous fashion such that it pierces the surface of the milk and causes turbulence to effect the mixing of the two fluids.

The preparation of this beverage is problematic in two significant respects. First, it is dependent upon the manual dexterity of the server. It is critical that the coffee be introduced at a slow rate dispersed over a large surface area in order to avoid mixing. A mistake cannot be hidden; a new serving must be prepared, at a cost of consumable materials as well as the time of the server and the dishwasher. Second, the necessarily slow process consumes the valuable time of the server, who must be physically present during the entire process of introducing the coffee into the vessel. This is exacerbated if multiple servings must be prepared.

There is thus a widely recognized need for a device that will achieve this result effectively and without the attendance of a person during the process.

### SUMMARY OF THE INVENTION

Accordingly, it is an object of the present invention to provide a novel method and device for preparing beverages consisting of two different liquids in such a manner that the two liquids do not mix but remain in layers, one above the other.

According to one aspect of the present invention there is provided a device for preparing a beverage including a first liquid and a second liquid of lower density than the first liquid in a drinking vessel, comprising a flow restrictor member through which the second liquid is transferred into the drinking vessel after the first liquid has been introduced therein, the flow restrictor member being formed with a plurality of holes therethrough of such size, number and distribution to permit the second liquid to flow therethrough at a rate such that the second liquid forms a distinct layer over the first liquid with a minimum of turbulence and mixing with respect to the first liquid.

According to a further aspect of the present invention there is provided a method of preparing a beverage, preferably café au lait, including a first liquid and a second liquid of lower density than the first liquid in a drinking vessel comprising introducing the first liquid into the drinking vessel and introducing the second liquid into the drinking vessel via a flow restrictor member formed with a plurality of holes therethrough of such size, number and distribution to permit the second liquid to flow therethrough at a sufficiently slow rate to form a distinct layer over the first liquid with a minimum of turbulence and mixing with respect to the first liquid.

According to features in the described preferred embodiments the first liquid is milk and the second liquid is selected from the group consisting of hot coffee, cocoa and tea.

According to features in the described preferred embodiments the flow restrictor member is removably supported on the open top of the drinking vessel at the time the second liquid is introduced into the drinking vessel over the first liquid.

According to features in the described preferred embodiments the second liquid is introduced into the drinking vessel from a container via the flow restrictor member carried by the container.

According to features in the described preferred embodiments the flow restrictor member includes a bottom wall formed with a plurality of holes formed therein.

According to features in the described preferred embodiments the device includes an outer supporting section or a separate supporting member, each of which extends below the bottom wall of the flow restrictor and terminates in a peripheral flange engageable with the open top of the drinking vessel for removably supporting the flow restrictor on the drinking vessel.

According to features in the described preferred embodiments the peripheral wall is formed with holes to permit vapor to pass therethrough.

According to features in the described preferred embodiments the well member is disposable after use.

According to features in the described preferred embodiments at least one of the well members and the supporting member are packaged together as a kit.

The present invention successfully addresses the shortcomings of the presently known configurations by providing a novel yet simple solution for the problems associated with preparing layered beverages.

### BRIEF DESCRIPTION OF THE DRAWINGS

With specific reference now to the drawings in detail, it is stressed that the particulars shown are by way of example and for the purposes of illustrative discussion of the preferred embodiment of the present invention only, and are presented in the cause of providing what is believed to be the most useful and readily understood description of the principles and conceptual aspects of the invention. In this regard, no attempt is made to show structural details of the invention in more detail that is necessary for a fundamental understanding of the invention, the description taken with the drawings making apparent to those skilled in the art how the several forms of the invention may be embodied in practice.

### In the drawings:

Fig. 1 illustrates a drinking vessel including a flow restrictor member constructed in accordance with a preferred embodiment of the present invention removably supported thereon;
Fig. 2 is a perspective view of the flow restrictor member of Fig. 1;
Fig. 3 is a side view section of the flow restrictor member of Fig. 1;
Fig. 4 is a bottom view of the flow restrictor member of Fig. 1;
Fig. 5 is a fragmentary view of the perforated surface of the flow restrictor member of Fig. 1 depicting its dimensions and the size and configuration of the holes therein;
Fig. 6 is a perspective view of a container carrying a flow restrictor member constructed according to a second embodiment of the invention;
Fig. 7 is a top view of the container of Fig. 6;

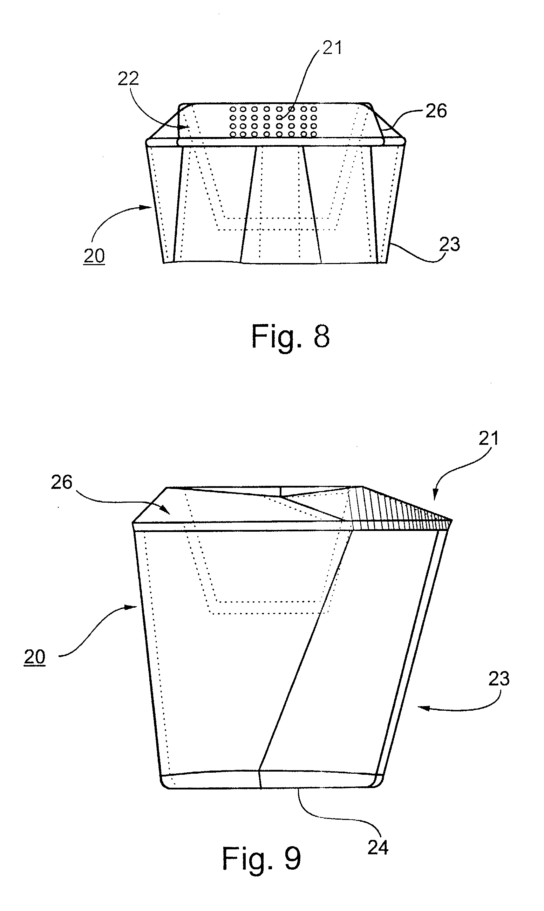

Fig. 8 is a front view of the upper part of the container of Fig. 6;
Fig. 9 is a side view of the container of Fig. 6;
Fig. 10 is a top perspective view of a two-part device constructed in accordance with a third embodiment of the present invention;
Fig. 11 is an exploded top perspective view of the two-part device of Fig. 10;
Fig. 12 is a top view of the two-part device of Fig. 10;
Fig. 13 is a bottom perspective view of the two-part device of Fig. 10;
Fig. 14 is a bottom perspective view of the flow restrictor member of the two-part device of Fig. 10;
Fig. 15 is a top perspective view of the flow restrictor member of Fig. 14;
Fig. 16 is a top view of the flow restrictor member of Fig. 14;
Fig. 17 is a side elevational view of the two-part device of Fig. 10 in assembled condition; and
Fig. 18 is an exploded view of the two-part device of Fig. 10 with the flow restrictor member separated from the supporting member.

### DESCRIPTION OF THE PREFERRED EMBODIMENTS

Before describing the illustrated embodiments of the invention, it is to be understood that the invention is not limited in this application to the details of construction and the arrangement of the components set forth in the following description or illustrated in the drawings. The invention is applicable to other embodiments and may be practiced or carried out in other ways. Also, it is to be understood that the phraseology and terminology employed herein are for the purpose of description and should not be regarded as limiting.

The principles and operation of a device and method for preparing beverages according to the present invention may be better understood with reference to the drawings and accompanying descriptions.

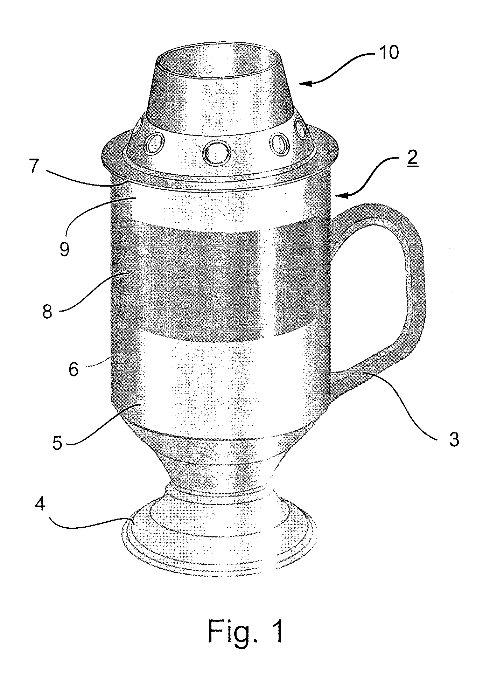

Reference is now made to Fig. 1 which shows a drinking vessel, in the form of a cup **2,** having a handle **3,** and a base **4,** for use in preparing café au lait in accordance with the present invention. For this purpose, milk, shown at **5**, is first introduced into cup **2** to a level designated **6** below the open top **7** of cup **2**. Thereafter, hot liquid coffee is introduced into cup **2** to form a distinct layer, as shown at **8**, over the milk, thus filling cup **2** to a level designated **9**.

Café au lait is prepared with the use of a flow restrictor member, hereinafter referred to as flow restrictor **10**, applied to the open top of cup **2** through which the hot liquid coffee is introduced. As described more fully below, flow restrictor **10** is formed with a plurality of holes of sufficiently small size, number and distribution to permit the coffee to flow through the holes at a sufficiently slow rate to form a distinct layer over the milk with a minimum of turbulence and mixing with respect to the milk.

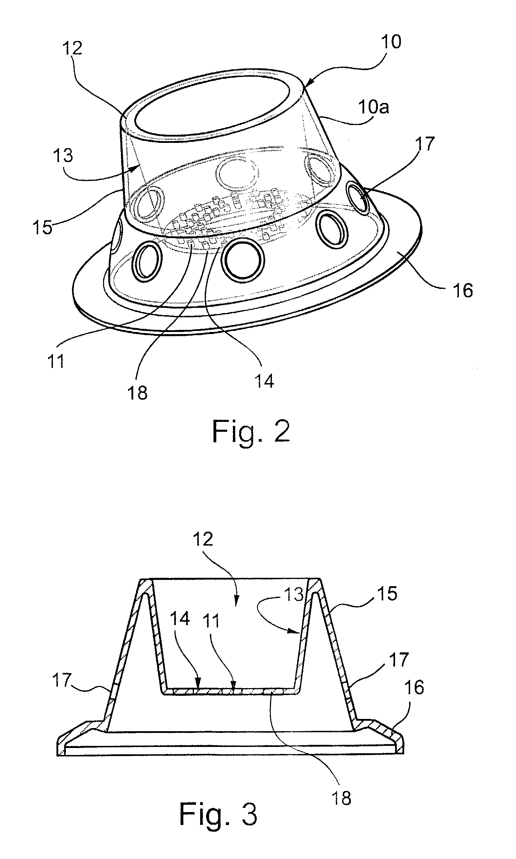

Reference is now made to Fig. 2 which illustrates a preferred embodiment of flow restrictor **10**. Flow restrictor **10** comprises a perforated surface **11,** which contains a plurality of holes, hereinafter referred to in their aggregate as holes **18.** Flow restrictor **10** is formed with an inner well section **12**, that can contain a liquid. Well **12** has a cylindrical side wall **13**, and a flat bottom **14**, which includes the perforated surface **11**.

According to the illustrated preferred embodiment, perforated surface **11** is of circular configuration, conforming to the shape of bottom **14** of well **12**. Well **12** is designed to receive a quantity of a liquid and to allow that liquid to pass therefrom via perforated surface **11** in bottom **14**.

Well **12** is circumscribed by an outer supporting section **15**, which extends below the level of bottom **14** of well **12** and terminates with a radially extending flange **16**, circumferential to its base. Outer supporting section **15** is formed with a plurality of holes **17**, arranged circumferentially just above flange **16** for the purpose of allowing vapor to escape from the vessel. Holes **17** also serve a decorative function.

Flow restrictor **10** is removably engageable with open top **7** of cup **2** by means of flange **16** at its base. By so engaging cup **2**, flow restrictor **10** is supported by cup **2** so that perforated surface **11** is positioned directly above open top **7** of cup **2,** allowing the coffee within well **12** to flow through the perforated surface **11** directly and slowly into cup **2.**

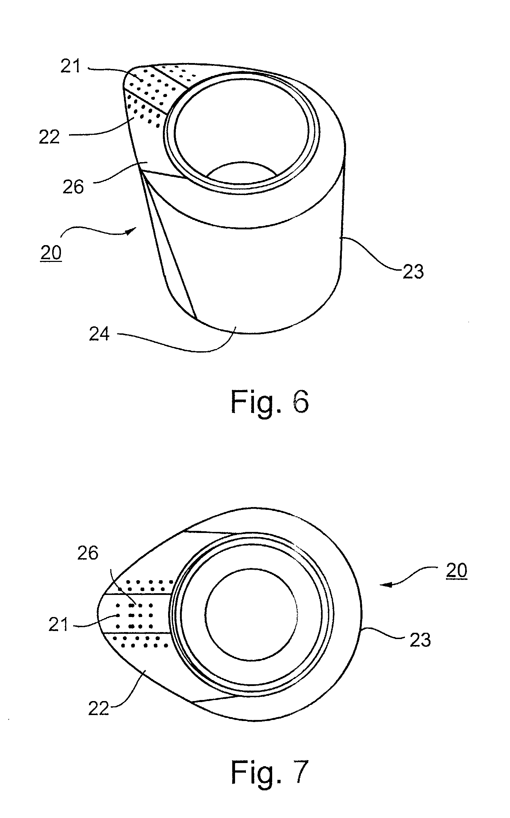

Figs. 6--9 illustrate another embodiment of the invention wherein the flow restrictor member, generally designated **21**, is incorporated in a container **20** for coffee in the shape of a pitcher or carafe, with the flow restrictor member **21** built into its lid **26**. Lid **26** carries flow restrictor **21** on its spout **22**, so that the flow of the coffee is restricted when poured from spout **22** of container **20**.

Container **20** comprises an outer wall **23**; a bottom **24** which serves as a base for container **20**; and lid **26** incorporating spout **22** through which the coffee is poured. Flow restrictor **21** on spout **22** restricts the flow of coffee when poured from container **20** in the same manner as flow restrictor **10** described above with respect to Figs. 1--5 restricts the flow of coffee from well **12**.

A relevant feature of flow restrictors **10** and **21** as described above with respect to Figs. 1--5 and Figs. 6--9, respectively, is the configuration and distribution of the holes therein. Flow restrictors **10** and **21** comprise a defined area containing a specific number of holes, each with a specific diameter and arranged in a specific pattern. According to the preferred embodiment illustrated in Figs. 1--5, perforated surface **11** preferably contains fifty-two holes **18** symmetrically dispersed over a surface area preferably containing 94 square cm. Each of holes **18** is preferably of circular configuration with a preferred diameter of 0.80mm. Holes **18** preferably comprise, in their aggregate, no less than 2% nor more than 13.56% of the surface area of perforated surface **11**. This combination of the number of holes **18**, the diameter of holes **18,** and the pattern of holes **18** preferably results in a rate of flow of 0.10 liter per 8-12 seconds.

The function of flow restrictors **10** and **21** is to restrict the flow of coffee from well **12** and container **20** respectively. The physical principals governing this process relate to the fluid dynamics of the hot coffee passing through the perforated surface. The factors involved are the following:
a. the viscosity of the fluid, which is determined by its specific gravity and its temperature;
b. the propensity of a fluid to adhere to a surface with which it comes into contact, which is a directly related to the surface area;
c. the friction caused by the flow of a fluid over a surface, which is influenced by the surface's smoothness, contour and quantity of surface area as well as by the speed and quantity of the fluid; and
d. the force applied to the fluid causing its movement.

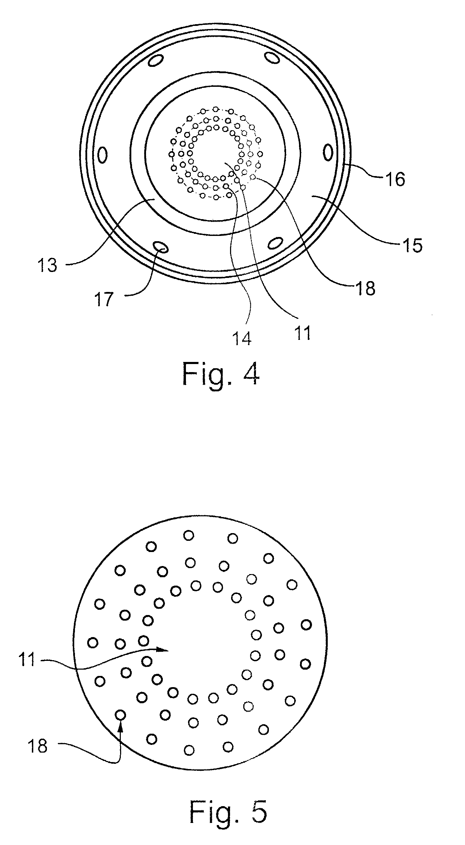

Taking into account all of the above factors, Fig. 5 illustrates the pattern, size and shape of holes **18** within perforated surface **11** that will allow a fluid with the specific gravity of the coffee customarily served, at a temperature preferably in excess of 90 degrees C. to flow by gravity alone in such a manner that the fluid remains floating upon the surface of milk with a minimum of mixing with the milk.

Accordingly, the method of making café au lait employing flow restrictor **10** consists simply of introducing steamed milk into a drinking vessel, placing flow restrictor **10** on the drinking vessel, and introducing hot coffee into flow restrictor **10**. The coffee will flow from flow restrictor **10** into the drinking vessel by force of gravity alone, in a manner such that there is limited mixing with the milk, the coffee remaining "floating" above it.

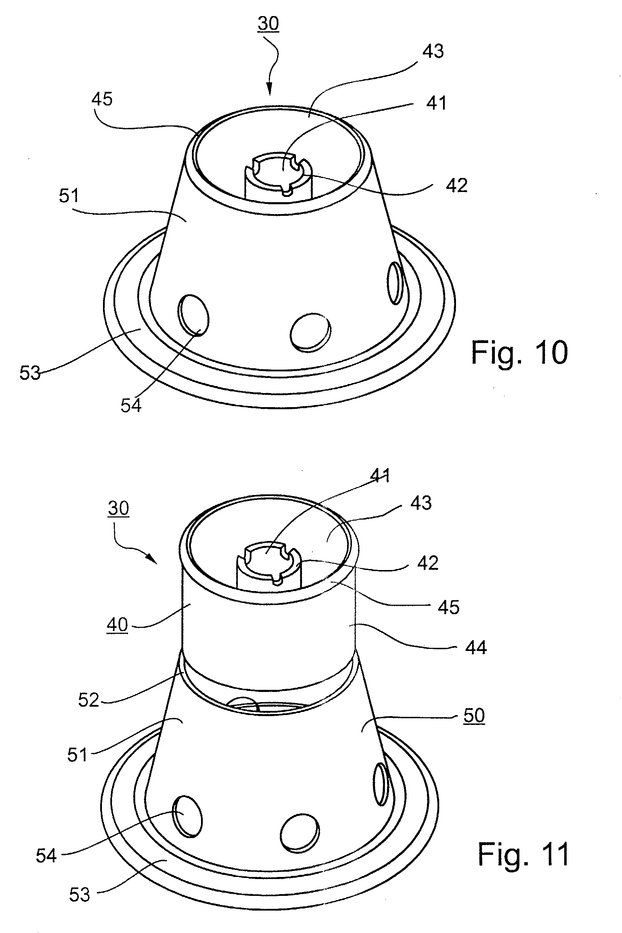

Reference is now made to Figs. 10--18 which illustrate a two-part device, generally designated 30, representing a further alternative embodiment of the invention, Two-part device **30** is shown in assembled configuration in Fig. 10 and in exploded configuration in Fig. 11.

The illustrated two-part device **30** comprises a flow restrictor member, generally referred to as flow restrictor **40**, and a supporting member, generally referred to as supporting member **50**, for removably supporting flow restrictor **40** over the open top of a drinking vessel.

Flow restrictor **40** comprises a peripheral wall **44** closed at its lower end by a bottom wall **46** and open at its upper end. Flow restrictor **40** also includes a hollow tube **42** fixed centrally to bottom **46** which defines an inner well **41** within the hollow tube and an outer well **43** between the hollow tube and wall **44**. According to the illustrated embodiment, inner well **41** is located coaxially with second section **43** and enclosed within second section **43**, separated by the wall of hollow tube **42**. It is appreciated that inner well **41** and outer well **43** may be configured differently within flow restrictor **40**, provided that a separating wall isolates them one from another such that their respective contents do not mix with one another.

The upper end of wall **44** has a protruding lip **45** radiating circumferentially. Lip **45** is sized and configured for mounting flow restrictor **40** centrally within supporting member **50.** Accordingly, lip **45** extends radially from wall **44** and reverts parallel to wall **44** in a direction toward the bottom of flow restrictor **40**, forming a channel therebetween with a gap sufficient to snugly engage supporting member **50,** preferably held in place by gravity.

Supporting member **50** comprises a peripheral wall **51** in a cylindrical shape of diminishing diameter from bottom to top. The top end of wall **51**, hereinafter referred to as rim **52**, is dimensioned to accept therein wall **44** of flow restrictor **40** and is designed and configured to engage lip **45** when flow restrictor **40** is centrally mounted on supporting member **50**. Wall **51** terminates at its bottom in a flange **53** radiating circumferentially therefrom, being designed and configured to engage the open top of a drinking vessel. It is appreciated that drinking vessels come in many shapes and sizes. Accordingly, wall **51** and flange **53** may vary in their shape and size in order to accommodate the relevant drinking vessel.

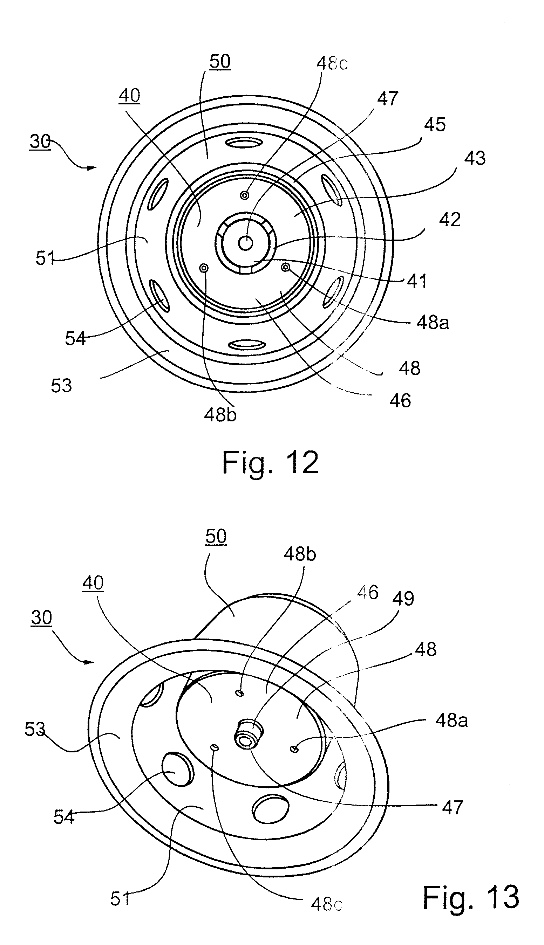

Reference is now made to Fig. 12 which shows the interior of flow restrictor **40**. Bottom **46** of flow restrictor **40** is attached around its circumference to the lower end of wall **44**. This attachment is sealed and impervious to the penetration therethrough of liquids.

Bottom **46** serves as a bottom for both inner well **41** and outer well **43**, closing both and rendering both capable of containing a liquid. The section of bottom **46** that closes inner well **41** has one hole **47** formed within it which allows the flow therethrough of the liquid contained in inner well **41**. The section of bottom **46** that closes outer well **43** carries a perforated surface **48**, which allows the flow of the liquid contained in outer well **41**.

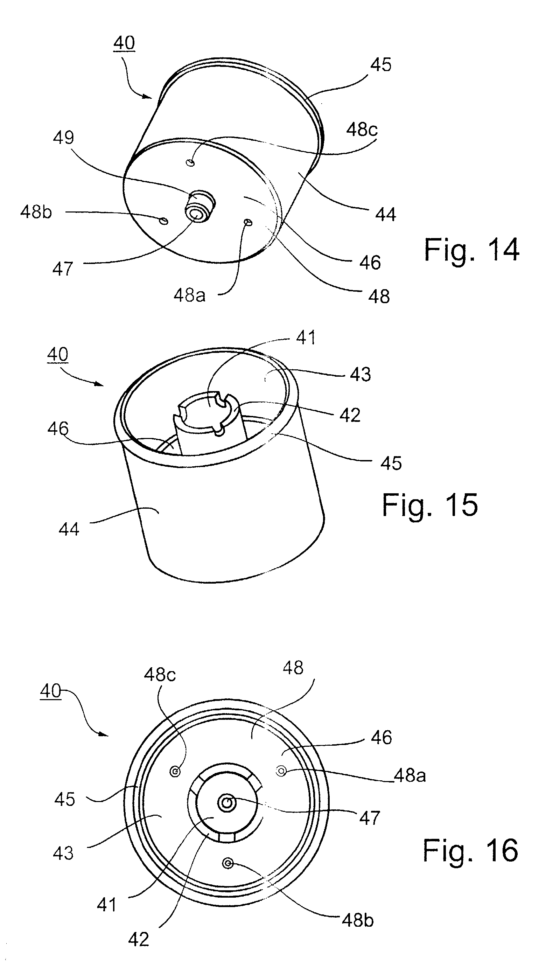

Reference is now made to Figs. 13 and 14, which depict the underside of two-part device **30** and particularly bottom **46** which is formed with hole **47** and perforated surface **48**. Hole **47** is formed in the portion of bottom **46** which closes inner well **41** and, according to the alternative embodiment, consists of a single hole. Hole **47** is surrounded by a projection extending downwardly from bottom **46**, defining a nozzle **49**, which serves to direct the flow of the liquid through hole **47** in the form of a stream. Perforated surface **48** is formed in bottom **46** which closes outer well **43** and comprises an annular array of three holes, **48a**, **48b** and **48c** respectively.

Fig. 14 provides a similar view of the underside of flow restrictor **40** dismounted from supporting member **50** wherein bottom **46,** hole **47**, and perforated surface **48** bearing holes **48a**, **48b** and **48c** are clearly shown. Also shown are wall **44** and lip **45**.

Fig. 15 is a top perspective view of flow restrictor **40** dismounted from supporting member **50**, wherein inner well **41** and outer well **43** are shown separated by the wall of hollow tube **42**. Inner well **41** and outer well **43** are shown open at their tops to facilitate the introduction therein of the liquid.

Fig. 16 shows bottom **46** bearing hole **47** within inner well **41** and bearing perforated surface **48** within outer well **43.** Hole **47** has a preferred diameter of 2.8 mm., and holes **48a, 48b** and **48c** each have a preferred diameter of 1.1 mm. The dimensions and configuration indicated result in a relatively rapid flow of the second liquid through hole **47** which allows it to mix slightly with the first liquid, and a relatively slow, restricted flow of the second liquid through holes **48a**, **48b** and **48c** which limits, preferably prevents, the mixing iof the second liquid with the first liquid. It is understood that the number, dimensions and configuration of holes in bottom **46** may vary depending upon the properties of the liquids constituting the beverage being prepared.

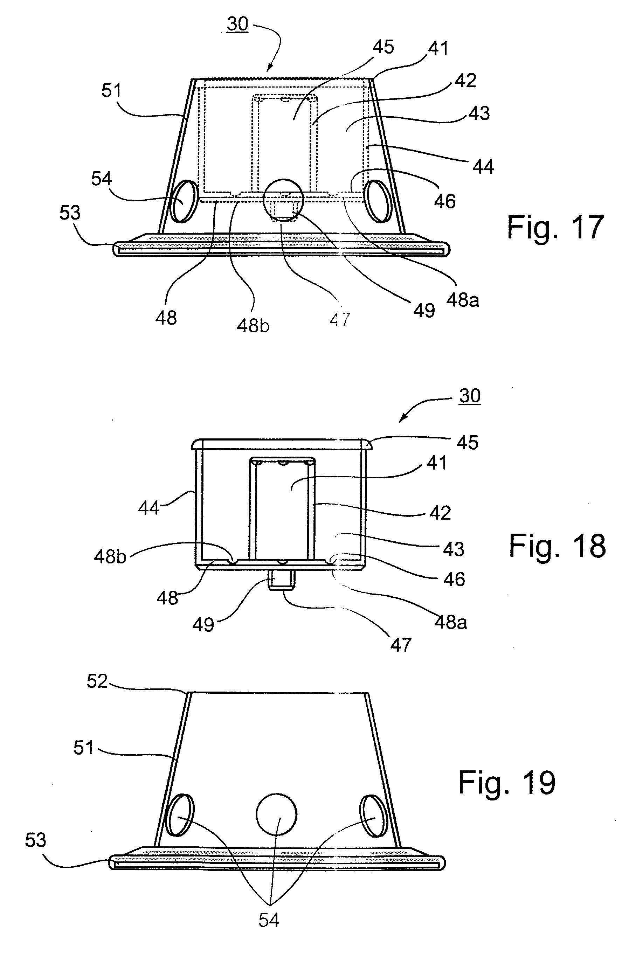

Fig. 17 shows flow restrictor **40** mounted within supporting member **50**. Viewed in this relationship, it is clear how the illustrated embodiment is supported atop a drinking vessel. Flange **53** radiates circumferentially from the bottom of wall **51** to engage the top rim of the drinking vessel.

Wall **51** of supporting member **50** extends below bottom **46** of flow restrictor **40**. Held in this relationship, hole **47** and perforated surface **48** are poised above the open top of the drinking vessel such that their respective liquids may flow therein. Wall **51** is shown bearing holes **54** which serve the practical function of venting the interior of supporting member **50** to the atmosphere and thereby preventing a pneumatic lock which may disrupt the flow through holes **47, 48a, 48b** and **48c.** Holes **54** are arrayed circumferentially around wall **51**, thereby also serving a decorative function. They also allow the aromatic vapors of the hot beverage within the drinking vessel to escape to the atmosphere.

Fig. 18 shows flow restrictor **40** dismounted from supporting member **50**. According to the alternative embodiment, the height of flow restrictor **40** is preferably 32 mm., the internal diameter of outer well **43** is preferably 39 mm., the internal diameter of inner well **41** is preferably 16 mm. and the height of hollow tube **42** is preferably 27 mm. It is understood that the above dimensions may vary according to alternative embodiments of the invention.

It can be seen from Fig. 18 that hollow tube **42** serves the additional function of providing an overflow alternative should the level of liquid in outer well **43** become too high. The top of hollow tube **42** is slightly lower than the top of wall **44** which encloses outer well **43** and has formed therein a number of slots. Accordingly, any liquid introduced into outer well **43** which causes the quantity of liquid therein to exceed the height of hollow tube **42** will flow into inner well **41** rather than overflow wall **44**.

The method of making café au lait employing the embodiment of Figs. 10--18 varies slightly from the method of making café au lait employing the embodiment of Figs. 1--5. According to the embodiment of Figs. 1--5, the milk is introduced directly into the drinking vessel and the hot coffee is introduced into well **12** and flows through holes **18** onto the milk within the drinking vessel. According to the embodiment of Figs. 10--18, the milk is introduced directly into the drinking vessel and the hot coffee is introduced into both inner well **41** and outer well **43**. The coffee flows through hole **47** and through perforated surface **48** into the drinking vessel at different rates. The respective pathways are designed such that the coffee flows relatively rapidly through hole **47** and flows relatively slowly and in a diffused fashion through perforated surface **48**. Accordingly, the coffee from inner well **41** is introduced in such a manner that it mixes with the milk causing the formation of a light brown layer, while the coffee from outer well **43** does not pierce the surface of the milk and remains "floating" above it without mixing therewith, resulting in a darker brown layer.

The alternate embodiment shown in Figures 10 -- 18 allows the preparer freedom to regulate the quantity of the coffee to be mixed with the milk. There are three different methods of employing the alternative embodiment. The first method comprises filling both inner well **41** and outer well **43** to their respective capacities with hot coffee. This will result in a measured quantity of coffee equal to the capacity of inner well **41** being introduced through hole **47** and mixing with the milk, and the remainder of the coffee passing through holes **48a**, **48b** and **48c** remaining above the milk without mixing with it. The second method includes pouring a different quantity of coffee into inner well **41** such that it will mix with the milk and pouring the remainder of the coffee into outer well **43** such that it will remain floating above the milk. This method allows the preparer to vary the proportion of coffee mixed with the milk and coffee not mixed with the milk according to desire. The third method consists of not using inner well **41** and pouring all of the coffee into outer well **43** so that all of the coffee remains floating over the milk and none is mixed with it.

Flow restrictor **40** and supporting member **50** are separately configured and may be fabricated independently of one another. Accordingly, the embodiment of Figs. 10 -- 18 is particularly suited to be marketed as a kit, with flow restrictor **40** being provided as a disposable unit fabricated of an inexpensive plastic material, and supporting member **50** being provided as a permanent element fabricated of a decorative and durable substance such as stainless-steel or other appropriate material.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

It will be appreciated by persons skilled in the art that the present invention is not limited to what has been particularly shown and described hereinabove. Rather, the scope of the present invention is defined by the appended claims and includes both combinations and subcombinations of the various features described hereinabove as well as variations and modifications thereof which would occur to persons skilled in the art upon reading the foregoing description. Accordingly, it is intended to embrace all such alternatives, modifications and variations that fall within the spirit and broad scope of the appended claims.

## Claims

1. A device for preparing a beverage in a drinking vessel having an open top, said beverage including a first liquid and a second liquid of lower density than said first liquid, said device comprising a flow restrictor member through which said second liquid is transferred into said drinking vessel after said first liquid has been introduced therein, said flow restrictor member being formed with a plurality of holes therein of such size, number and distribution to permit said second liquid to flow therethrough at a rate such that said second liquid forms a distinct layer over said first liquid with a minimum of turbulence and mixing with respect to said first liquid, wherein said flow restrictor member includes a peripheral wall, a bottom wall formed with said plurality of holes and a hollow tube fixed centrally to said bottom wall to define, within said hollow tube, an inner well of relatively small volume and, between said hollow tube and said peripheral wall, an outer well of greater volume, said bottom wall being formed with at least one further hole communicating with said inner well of larger diameter than each of said plurality of holes, such that said second liquid within said inner well flows out from said at least one further hole into said drinking vessel at a higher flow rate than that of said second liquid from said outer well through each of said plurality of holes in said bottom wall.

2. The device according to Claim 1, wherein said flow restrictor member is constructed so as to be removably supportable on said open top of the drinking vessel at the time that said second liquid is transferred into said drinking vessel over said first liquid.

3. The device according to Claim 1, wherein said peripheral wall is of greater height than said hollow tube.

4. The device according to Claim 1, wherein said hollow tube is formed with slots at its upper end to allow overflow of said second liquid within said outer well into said inner well.

5. The device according to Claim 1, wherein said bottom wall includes a single hole communicating with said inner well and an annular array of holes communicating with said outer well; said single hole having a relatively larger dimension for allowing said second liquid to discharge relatively rapidly therethrough such that said second liquid pierces the surface of said first liquid and mixes therewith, each of said annular array of holes having relatively smaller dimensions for allowing said second liquid to discharge relatively slowly therethrough such that said second liquid does not appreciably pierce the surface of said first liquid and does not appreciably mix therewith.

6. The device according to Claim 1, further comprising a supporting member for removably supporting said flow restrictor member over said open top of said drinking vessel, said supporting member having a peripheral wall formed with a top rim for removably mounting said flow restrictor member centrally therein, said peripheral wall extending below said flow restrictor member and terminating in a peripheral flange engageable with said open top of the drinking vessel for removably supporting said flow restrictor member on said drinking vessel.

7. The device according to Claim 6, wherein said peripheral wall of said supporting member is formed with holes to permit vapor to pass therethrough.

8. The device according to Claim 6, wherein said peripheral wall of said cylindrical receptacle has a protruding lip radiating circumferentially from the top thereof for removably engaging said top rim of said supporting member.

9. The device according to Claim 1, wherein said flow restrictor member is of a plastic material disposable after use.

10. The device according to Claim 9, wherein said supporting member is of a metal for multiple use.
